(19) Europäisches Patentamt

European Patent Office

Office européen des brevets

(11) **EP 0 342 967 B1**

(12) **EUROPEAN PATENT SPECIFICATION**

(45) Date of publication and mention
of the grant of the patent:
**17.01.1996 Bulletin 1996/03**

(51) Int Cl.⁶: **G11B 11/12**, G11B 9/08,
G03G 5/02, G11B 11/08

(21) Application number: 89305009.6

(22) Date of filing: **17.05.1989**

(54) **Electrostatic information recording medium and electrostatic information recording and reproducing method**

Elektrostatisches Informationsaufzeichnungsmedium und elektrostatische Informationsaufzeichnungs- und -wiedergabemethode

Milieu d'enregistrement électrostatique d'information et méthode d'enregistrement et de réproduction électrostatique d'information

(84) Designated Contracting States:
**CH DE ES FR GB IT LI NL SE**

(30) Priority: 17.05.1988 JP 121592/88
20.05.1988 JP 123603/88
24.05.1988 JP 127551/88
24.05.1988 JP 127552/88
24.05.1988 JP 127553/88
24.05.1988 JP 127555/88
24.05.1988 JP 127556/88
24.09.1988 JP 239490/88
26.09.1988 JP 240070/88
08.12.1988 JP 310484/88
27.12.1988 JP 330226/88
28.12.1988 JP 331589/88
15.03.1989 JP 62754/89
16.03.1989 JP 64263/89
18.03.1989 JP 67243/89

(43) Date of publication of application:
**23.11.1989 Bulletin 1989/47**

(60) Divisional application: **95201292.0**

(73) Proprietor: **DAI NIPPON PRINTING CO., LTD.**
**Tokyo 162 (JP)**

(72) Inventors:
• **Matsuo, Makoto Dai Nippon Printing Co., Ltd.**
**Tokyo 162 (JP)**
• **Iijima, Masayuki Dai Nippon Printing Co., Ltd.**
**Tokyo 162 (JP)**
• **Utsumi, Minoru Dai Nippon Printing Co., Ltd.**
**Tokyo 162 (JP)**
• **Taniguchi, Yukio Dai Nippon Printing Co., Ltd.**
**Tokyo 162 (JP)**
• **Obata, Hiroyuki Dai Nippon Printing Co., Ltd.**
**Tokyo 162 (JP)**
• **Take, Seiji Dai Nippon Printing Co., Ltd.**
**Tokyo 162 (JP)**

(74) Representative: **Dixon, Donald Cossar et al**
**London WC2A 1QU (GB)**

(56) References cited:
EP-A- 0 249 214        EP-A- 0 327 236
EP-A- 0 341 668        DE-A- 2 440 485
DE-A- 3 712 473        GB-A- 799 829
US-A- 3 865 975        US-A- 3 992 204
US-A- 4 095 280        US-A- 4 296 478
US-A- 4 757 472

## Description

The present invention relates to an electrostatic information recording and reproducing method, by which the information can be electrostatically recorded and reproduced at any desired time. The invention also provides a recording medium for use therewith.

Conventionally, silver salt photographic method is already known as a technique for high sensitivity photographing. In this photographing method, the photographed image is recorded on film through the development process, and silver salt emulsion (such as photographic paper) is used for reproducing the image or it is reproduced on cathode ray tube (CRT) by optically scanning the developed film.

There is also an electronic photographing technique, in which an electrode is deposited on photoconductive layer by evaporation and the surface of photoconductive layer is electrically charged by corona charging in dark place. Then, it is exposed to intensive light to make the exposed photoconductive layer electrically conductive. By removing the electric charge on that portion by leaking it to form electrostatic latent image on the surface of the photoconductive layer, and the toner is attached, which has electric charge with the polarity opposite to that of the remaining electrostatic charge. This technique is mostly used for duplication purpose and is not generally suitable for photographing because of low sensitivity. Since electrostatic charge carrying time is short, toner development is usually performed after electrostatic latent image is formed.

Further, there is the method for TV photographing technique, in which photographing is performed by the image pickup tube and the image information obtained by optical semiconductor is taken out as electric signal. This is directly outputted on CRT or is recorded on video by magnetic recording and the image is reproduced on CRT when desired.

Also, a method is known, in which thermoplastic materials having electric charge carrying property are laminated on transparent electrode and selenium particles are deposited by vacuum evaporation on the surface of the thermoplastic material and is infiltrate to prepare the recording medium. To record the information on this recording medium, the surface of the thermoplastic material is electrically charged by corona charging, and the image is exposed to light by applying voltage between the electrodes disposed at face-to-face positions. Thus, optical carrier is generated on the photoconductive particles in the exposure portion to form the latent image. For the development, the thermoplastic material is softened by heating, and only the photoconductive particles generating optical carrier are migrated in the thermoplastic material layer. The information thus developed are reproduced as visible information according to the quantity of transmission light. (U.S. patent specifications No. 3,520,681, 4,101,321 and 4,496,642)

Silver salt photographing method is an excellent means to preserve the image of the object, but it requires a development process to form the silver salt image and also the complicated optical, electrical and chemical processings are involved in reproducing the image to hard copy and soft copy (CRT output), etc.

The electronic photographing technique is more simple and quicker than the silver salt photographing method in reproducing the electrostatic latent image, whereas the latent image can be preserved only for short period, and the dissociation of the development, image quality, etc. are inferior to those of silver salt method.

TV photographing technique requires linear sequential scanning to take out and record the electric image signals obtained by the pickup tube. Linear sequential scanning is performed by electron beam in the pickup tube and by magnetic head in video recording. Since resolution depends upon the number of scanning lines, it is extremely inferior to the planar analog recording such as silver salt photographing.

The recently developed TV image pickup technique using solid-state image sensor (such as CCD) is also essentially the same with regard to the resolution.

The problems involved in these techniques lie in the fact that the processing becomes more complicated if higher quality and resolution are required in the image recording and the memory function is lacking or image quality is basically poor if the processing is simplified.

There is another technique, in which thermoplastic material layer containing selenium particle layer is provided on the transparent electrode and it is electrically charged by corona charging. After the image is exposed, thermoplastic material is softened and the image is heat-developed, and the information is reproduced as visible information. In this case, the electric charge information thus accumulated can be preserved for long period (10 years or more), whereas the application is limited as information recording means by camera because corona charging is needed for information recording. Also, on the surface of thermoplastic resin softened during heat development, the so-called frost phenomenon occurs, in which fine irregularities are caused by the repulsion between the surface electric charge, when it is electrically charged to higher potential. As the result, when the accumulated information is detected as surface potential, noise occurs and the resolution is adversely affected.

An object of the present invention is to solve the problems as described above, to offer a new electrostatic information recording and reproducing method, which can produce an image of high quality at high resolution in a simple and easy process, whereby recording can be achieved for long time and characters, line drawings, images, codes and (1, 0) information can be reproduced arbitrarily in appropriate quality.

There is known, see for example, EP-A-0327 236 and GB-A 799,829, an electrostatic information recording medium comprising a photoconductive layer laminated on an insulating layer which is in turn laminated on an electrode. In the use of such a recording medium, the photoconductive layer is exposed to light through a transparent electrode whilst an electric potential is applied between the transparent electrode and the other electrode provided by the information recording medium.

When information (image wise) light is entered from the side of the transparent electrode with voltage applied between both electrodes, charge carriers migrate toward the electrode of the electrostatic information recording medium in the photoconductive layer, on which the information light is irradiated, and an information containing electric charge is accumulated on the insulating layer. Although the photoconductive material constituting the photoconductive layer has generally an insulating property, its electric charge retaining property is low. Thus, the electric charge accumulated in the photoconductive layer migrates into the photoconductive layer as time elapses. As a result, a phenomenon such as bleeding occurs on the image when it is reproduced.

It is accordingly a further object of the invention to provide an image recording method, and an image recording medium for use therewith where this disadvantage can be eliminated.

This object is achieved by the features of Claims 1 and 8.

According to preferred features of the invention the information recorded by electrostatic information recording method is reproduced and outputted as the electrostatic charge information.

In reproducing the recording, the potential difference from surface potential at the electrode and electrostatic information recording medium can be easily determined. For example, the generated potential can be detected by electric charge induced on the detection electrode.

A guard electrode may be furnished around the detection electrode, or an insulating film may be provided on the surfaces of the detection electrode and the guard electrode.

Another method may be used, in which the detection electrode is a long thin rod type electrode and the distribution of the potential is determined by CT technique over the surface of the electrostatic information recording medium.

There is a further method, in which the detection electrode is disposed on the electrostatic information recording medium on contact or non-contact basis and the accumulated electric charge is detected by potential or current value.

Or, the potential of electric charge may be read by the method, in which the electrostatic information recording medium is processed by toner development, the light beam is irradiated, and the reflected light is converted photoelectrically.

The electrostatic information recording medium of this invention can accumulate the analog information such as characters, line drawings, images, (0, 1) information, etc. or digital information by making it an electric charge carrying layer with high charge carrying property.

Thus, the information can be permanently preserved. The information of high quality and high resolution can be accumulated because the information is accumulated in electrostatic electric charge, and it can be preserved for long period as electrostatic latent image.

The information memory capacity in the electrostatic information recording medium of this invention is: 175 lines/in., 2R (4 picture elements/mesh point), i.e. 350 picture elements/in. = 14 dots/mm. Under the condition of A4 size, it is: 297 mm x 14 dots/in. x 210 mm x 14 dots/in. x 4 colors. The information quantity in the publication in A4 size is 50 MB, while the information quantity of $1 \text{ mm}_2$ of the electrostatic information recording medium of this invention is $\mu m$ x 1 $\mu m$. If one picture elements has 256 gradations (The information quantity of one picture element= 1B) (analog recording), it is 1000 picture elements x 1000 picture elements with the information density of $1 \text{ MB/mm}^2$. Accordingly, for $1 \text{ cm}^2$ of the electrostatic information recording medium, it is possible to enter the information as much as a color publication with 175 lines in A3 size. Compared with the information density of $3 \times 10^3 \text{ bit/cm}^2$ of a 8-inch 1 MB floppy disk, $10^6 \text{ bits/cm}^2$ of a high density floppy disk, $7.5 \times 10^6 \text{ bits/cm}^2$ of a digital audio tape (DAT) and $2 \times 10^8 \text{ bits/cm}^2$ of an optico-magnetic disk, the information density of the electrostatic information recording medium of this invention is as high as $8 \times 10^8 \text{ bits/cm}^2$.

Because the accumulated information can be obtained at any scanning density by reading and outputting the local potential of the electrostatic latent image at any desired time, the image of high image quality can be obtained in exactly the same way as in the silver salt photographing and in reproducing it by optical scanning. Since physical or chemical means such as the development means is not required for the direct potential detection, inexpensive and convenient recording and reproducing system can be actualized.

In the accompanying drawings:

Fig. 1 is a cross-sectional view of the electronic information recording medium of this invention,

Figs. 2 and 3 are cross-sections to explain the electrostatic information recording method of this invention,

Figs. 4, 5 and 6 are diagrams to illustrate the potential reading method of the DC amplifying type,

Figs. 7, 8 and 9 show examples of the potential reading method of the Ac amplifying type,

Figs. 10 and 11 are drawings illustrating examples of the potential reading method by the CT scanning method,

Fig. 12 illustrates an example of the potential reading method of the power collecting type,

Fig. 13 shows an example of the potential reading method of the electron beam type,

Figs. 14 and 15 explain the potential reading method utilizing toner colouring, and

Fig. 16 shows an approximate configuration of the components needed for electrostatic image reproduction of this invention.

The electrostatic information recording and reproducing or playing-back processes according to the present invention will now be explained.

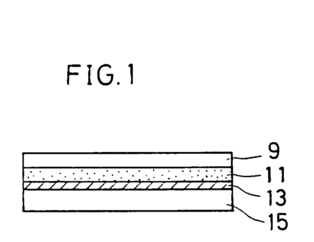

Basically, the electrophotographic information recording system used to this end is shown in Fig. 1 and comprises an electrostatic information recording medium 11 and a photosensitive member 9 located in opposition thereto.

When irradiated with light, the photoconductive layer 9 generates light carriers (electrons, positive holes) from the irradiated region, which can migrate widthwise therethrough.

The layer 9 is more effective in the presence of an electric field. The layer 9 may be formed of an inorganic photoconductive material, an organic photoconductive material or a composite type of inorganic/organic photoconductive material thereof.

Such photoconductive materials and the formation of the photoconductive layers will now be explained.

(A) Inorganic Photosensitive Member (Photoconductor)

Inorganic photosensitive materials used may include amorphous silicon, amorphous selenium, cadmium sufide or zinc oxide.

(a) Amorphous Silicon Photosensitive Member

The amorphous silicon photosensitive member may be formed of:

(i) Hydrogenated amorphous silicon (a-Si:H), and

(ii) Fluorinated amorphous silicon (a-Si:F) which is not doped with impurities, is doped with B, Al, Ga, In, Tl or the like into a p-type (a hole transfer type), or is doped with PL, Ag, Sb or Bi into an n-type (an electron transfer type). For the formation of a photosensitive layer, silane and impurity gases may be introduced with a hydrogen gas, etc. into a low vacuum atmosphere ($10^{-2}$ to 1 Torr) to deposit them on an electrode substrate heated or not heated by glow discharge into a film, or may be formed on a simply heated electrode substrate through thermochemical reactions. Alternatively, the starting solid material may be formed into a film by vapor deposition or sputtering. The obtained film may be used in the form of a single or laminated layers. The film may have a thickness of 1 to 50 $\mu$m.

(b) Amorphous Selenium Photosensitive Member

Photosensitive amorphous selenium includes (i) amorphous selenium (a-Se), (ii) amorphous selenium tellurium (a-Se-Te), (iii) amorphous arsenic selenium (a-As,Se), (iv) amorphous arsenic selenium Te (a-As-Se-Te) or the like.

This photosensitive film may be prepared by vapor deposition or sputtering, and an $SiO_2$, $Al_2O_3$, SiC or SiN layer may be formed on an electrode substrate as the charge blocking layer by vapor deposition, sputtering, glow discharge or other suitable means. Alternatively, the above substances (i) to (iv) may be used in combination and formed into a laminated type of photosensitive member. The photosensitive member may have a similar film thickness as stated in connection with the amorphous silicon photosensitive member

(c) Cadmium Sulfide (CdS)

This photosensitive member may be prepared by coating, vapor deposition or sputtering. For vapor deposition, solid particles of CdS may be placed on a tungsten boat and vapor-deposited thereon by resistance heating or EB (electron beams). For sputtering, a CdS target may be used to deposit on a substrate in argon plasma. In this case, CdS is usually deposited in an amorphous state, but it may be possible to obtain a crystalline oriented film (oriented in the thickness direction) by selecting the conditions for sputtering. For coating, CdS particles (having a particle size of 1 to 100 $\mu$m) dispersed in a binder with the addition of a solvent may be coated on a substrate.

(d) Zinc Oxide (ZnO)

This photosensitive member may be prepared by coating or CVD. For coating, ZnO particles (having a particle size of 1 to 100 $\mu$m) dispersed in a binder with the addition of a solvent may be coated on a substrate. For CVD, an organic metal such as diethyl zinc or dimethyl zinc is mixed with an oxygen gas in low vacuum ($10^{-2}$ to 1 Torr) and subjected to chemical reactions on an electrode substrate heated (to 150 to 400 °C), whereby it is deposited thereon in the form of a zinc oxide film, which is again oriented in the thickness direction.

(B) Organic Photosensitive Member

The organic photosensitive member is broken down into single-layer and function-separated types.

(a) Single Layer Type of Photosensitive Member

The single layer type of photosensitive member comprises a mixture of a charge generator substance with a charge transporter substance.

## Charge Generators

The charge generators are substances having the property of absorbing light to generate charges and transmitting such charges to the charge transporter substances. Used to this end are substances based on azo pigments, bis-azo pigments, trisazo pigments, phthalocyanine pigments, perylene pigments, triphenylmethane dyes, styryl dyes, azulenium salt pigments, squalenium salt pigments, methine pigments, pyrylium dyes, cyanine dyes and methine dyes.

## Charge Transporters

The charge transporters are substances capable of satisfactorily transporting ionized charges. Used to this end are substances based on hydrazones, pyrazolines, polyvinyl carbazoles, carbazoles, stilbenes, anthracenes, naphthalenes, tridiphenylmethanes, azines, amines, aromatic amines, oxadiazoles, triazoles, polycyclic aromatics and the like.

A charge-transfer complex may also be formed from the charge-generating and transporting substances.

Usually, photosensitive members have their photosensitive characteristics determined by the light absorption properties of the charge-generating substances. However, the complexes obtained by mixing the charge generating substances with the charge transporting substances have their light absorption properties varied. For instance, polyvinyl carbazole (PVK) is only sensitive in an ultraviolet region and trinitrofluorenone (TNF) is only sensitive in the vicinity of a 400-nm wavelength region, but a PVK-TNF complex is sensitive even to wavelength regions of up to 650 nm.

Preferably, such a single layer type of photosensitive member has a film thickness of 10 to 50 $\mu$m.

### (b) Function-Separated Type of Photosensitive Member

The charge-generating substances tend to absorb light to generate charges but have the property of trapping charges, whereas the charge-transporting substances have superior charge-transporting characteristics but are inferior in the charge-generating properties due to light absorption. For that reason, both the substances are separated from each other to make much use of their individual properties. A charge generating layer is thus laminated on a charge transporting layer, and vice versa.

In order to make the function-separated type of photosensitive member, the charge-generating substance is first dissolved or dispersed with a binder in a solvent and the resulting coating solution is spread on an electrode to form a charge generating layer. Then, the charge transporting substance is likewise dissolved or dispersed with a binder in a solvent and the resulting coating solution is spread and then dried on the charge generating layer to form a charge transporting layer. Preferably, the charge generating layer may have a film thickness of 0.1 to 10 $\mu$m, while the charge transporting layer may be of 10 to 50 $\mu$m in film thickness.

Binders used for both the single-layer and function-separated types of organic photosensitive members may include, for instance, silicone resins, styrene/butadiene copolymer resins, epoxy resins, acrylic resins, saturated or unsaturated polyester resins, polycarbonate resins, polyvinyl acetal resins, phenolic resins, polymethyl methacrylate (PMMA) resins, melamine resins and polyimide resins. For facilitated deposition, the binder may be used in an amount of 0.1 to 10 parts per part of each of the charge-generating and transporting layers. For coating, use may be made of dipping, vapor deposition, sputtering or other suitable means.

### (c) Inorganic/Organic Laminated Type of Photosensitive Layer

The member may be formed (1) using the above inorganic photoconductive layer such as a-Si, a-Se, CdS and ZnO layers for the charge generating layer and the above organic charge transporting layer for the charge transporting layer or (2) using the above organic charge generating layer for the charge generating layer and the above inorganic photoconductive layer for the charge transporting layer.

Referring to the film thickness, the charge-generating and transporting layers may be 0.1 to 10 $\mu$m and 10 to 50 $\mu$m, respectively, as is the case with the above function-separated type of organic photosensitive member.

A charge blocking layer will now be explained in detail.

The charge blocking layer may be provided to prevent a dark current from occurring on at least one or both sides of the photoconductive layer 9 (the injection of charges from the electrode) at the time when voltage is applied, viz., a phenomenon where, as if exposed to light, charges migrate through the photoconductor even when not actually exposed to light.

The charge blocking layer is of two types, one making use of a so-called phenomenon where charge transfer occurs in the presence of a high electric field and the other the rectifying effect. With the layer making use of such a phenomenon a current does neither pass through the photoconductive layer nor reach the surface of the insulating layer. When light is incident upon that layer, however, a high electric field is applied to its region on which light is incident due to the presence of one (electron or hole) of charges generated in the photoconductive layer, so that a current can pass through the charge blocking layer through the resulting charge transfer effect. Such a charge blocking layer may be formed of an inorganic insulating film, an organic insulating polymeric film, an insulating mono layer and so on, which may be used alone or laminated. The inorganic insulating film may be obtained from $As_2O_3$, $B_2O_3$, $Bi_2O_3$, CdS, CaO, $CeO_2$, $Cr_2O_3$, CoO, $GeO_2$, $HfO_2$, $Fe_2O_3$, $La_2O_3$, MgO, $MnO_2$, $Nd_2O_3$, $Nb_2O_5$, PbO, $Sb_2O_3$, $SiO_2$, $SeO_2$, $Ta_2O_5$, $TiO_2$, $WO_3$, $V_2O_5$, $Y_2O_5$, $Y_2O_3$, $ZrO_2$, $BaTiO_3$, $Al_2O_3$, $Bi_2TiO_5$, CaO-SrO, caO-$Y_2O_3$, cr-SiO, $LiTaO_3$, $PbTiO_3$, $PbZrO_3$, $ZrO_2$-Co, $ZrO_2$-$SiO_2$, AlN, BN, NbN, $Si_3N_4$, TaN, TiN, VN, ZrN, SiC, TiC, WC, $Al_4C_3$ and so on by glow discharge, vapor deposition, sputtering or other suitable means. It is noted that the thickness of this film may be determined for each material, while taking into consideration the insulating properties for preventing the injection of charges and the charge transfer effect. For the charge injection-preventing layer making use of the rectifying effect, there is provided a charge transporting layer capable of transporting charges and having polarity opposite to that of the electrode substrate. Thus, such a charge injection-preventing layer is formed of an inorganic photoconductive layer, an organic photoconductive layer or a composite inorganic/organic type of photoconductive layer, and has a film thickness of about 0.1 to 10 $\mu$m. More specifically, when the electrode is negative, use may be made of an amorphous silicon photoconductive layer doped with e.g. B, Al, Ga or In as well as an organic photoconductive layer obtained by dispersing throughout a resin amorphous selenium or an oxadiazole, pyrazoline, polyvinyl carbazole, stilbene, anthracene, naphthalene, tridiphenylmethane, triphenylethane, azine, amine or aromatic amine. When the electrode is positive, use may be made of an amorphous silicon photoconductive layer doped e.g. with P, N, As, Sb or Bi as well as a photoconductive layer e.g. of ZnO formed by glow discharge, vapor deposition, CVD, coating or other suitable means.

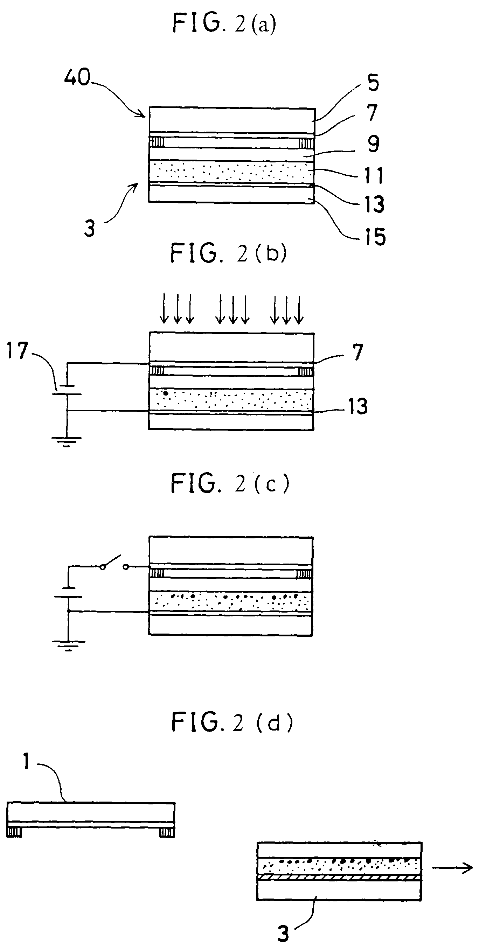

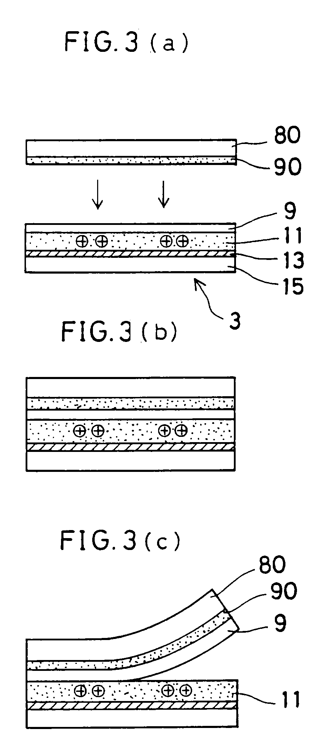

The electrostatic information recording system of Fig 1 is exposed to information-bearing light while located in opposition to a transparent electrode 40, as illustrated in Figure 2. The transparent electrode 40 comprises a support 5 of 1 mm thick glass on which is provided a transparent electrode of 1000-Å thick ITO. As shown in Fig. 2, the electrostatic information recording system further comprises a support 15 and an electrode 13, and there is provided a power source 17 coupled between the electrodes 7 and 13. Information is first recorded in the electrostatic information medium with the photoconductive layer 9 laminated on the recording medium, as described in more detail in Examples 1 and 2 below. Then, a plastic film 80 coated with, e.g. an adhesive agent 90 is applied on the photoconductive layer 9, as shown in Figure 3. By releasing the plastic film 80, the photoconductive layer 9 is bonded to the plastic film adhesive layer to release a charge retaining layer as shown in Figure 3 (c), thereby stabilizing information-bearing charges. This is because the information-bearing charges ten to diffuse through the photoconductive layer with the lapse of time.

How to read the information-bearing charges recorded in the electrostatic information recording medium will now be explained.

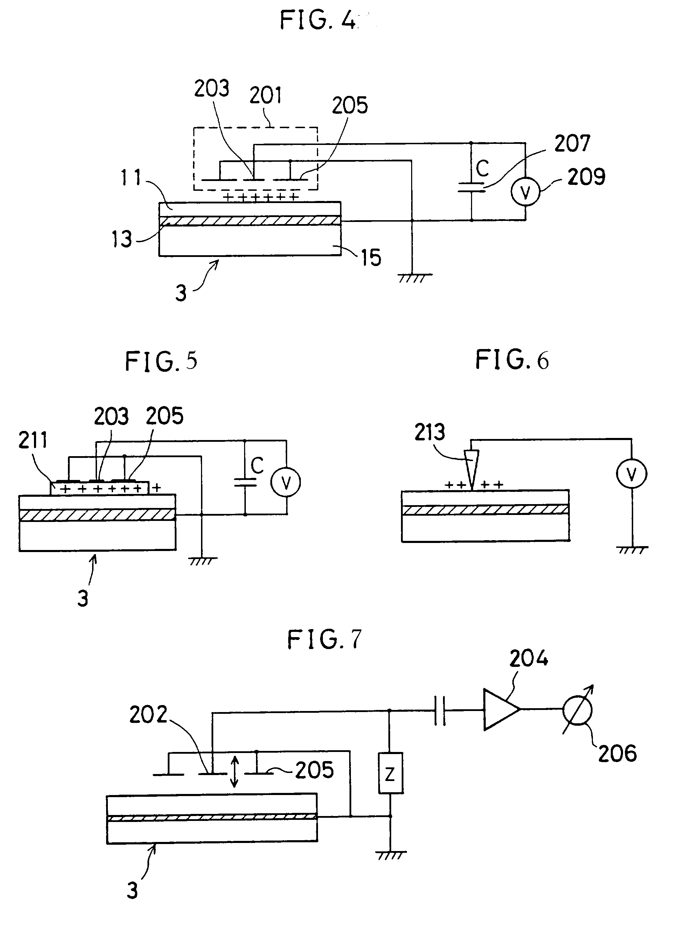

As an example, how to read potentials in the electrostatic information recording and playing-back processes according to the present invention is illustrated in Figure 5, wherein reference numeral 201 stands for a potential reader section, 203 a detection electrode, 205 a guard electrode, 207 a capacitor and 209 a voltmeter.

When the potential reader section 201 is located in opposition to the surface of an electrostatic information recording medium 3 on which charges are built up, the detection electrode 203 is subjected to an electric field defined by charges accumulated on a charge retaining layer 11 of the recording medium 3, thus generating on its surface induction charges in the amount equal to that of the charges on the recording medium 3. Since the capacitor 207 is charged with charges of polarity opposite to that of such induction charges in the same amount, there is a potential difference corresponding to the accumulated charges between the capacitor's electrodes, which is in turn read on the voltmeter 209, thereby determining the potential of the charge retainer. Then, an electrostatic latent image can be produced in the form of electrical signals by scanning the surface of the electrostatic information recording medim with the potential reader section 201. It is noted that only with the detection electrode 203, there is a drop of resolving-power under the action of an electric field (an electric line of force) defined over a range wider than the region of the recording medium opposite to the detection electrode; hence, the guard electrode may be grounded around the detection electrode. According to such a system, since the electric line of force acts vertically to a plane, it can be obtained from only the region opposite to the detection electrode 203. Thus, it is possible to read the potential of a region having an area nearly equal to that of the detection electrode. Since the accuracy and resolving-power of potential reading vary largely depending upon the geometry and size of the detection and guard electrodes as well as the space between them and the electrostatic information recording medium, it is essentially required to design them while taking into account the optimum conditions to meet the performance demanded.

Figure 5 illustrates another system to read potentials, which is similar to that illustrated in Figure 4 provided that the potential is detected through an insulating protective film 211 on which the detection and guard electrodes are mounted.

According to this system designed to come in contact with the electrostatic information recording medium for the detection of potentials, it is possible to keep constant the space between the detection electrode and the recording medium.

Figure 6 is a view showing still another system of how to read potentials, wherein a needle-like electrode 213 is brought in direct contact with the electrostatic information recording medium to detect the potential of the region of contact. In this system, it is possible to obtain high resolving-power due to reductions in the area to be detected. Higher reading rates are also achievable by the provision of a plurality of needle-like electrodes.

The above systems are all of the DC amplification type designed to detect DC signals in contact or non-contact relation. In what follows, the AC amplification type of systems will now be explained.

Figure 7 is a view illustrating a vibration electrode type of potential reading system, wherein 202 is a detection electrode, 204 an amplifier and 206 a meter.

The detection electrode 202 vibrates and is driven such that as time goes by, it displaces with respect to a charged surface of an electrostatic information recording medium 3. As a consequence, a potential across the detection electrode 202 varies with time at an amplitude corresponding to the electrostatic potential of the charged surface. This potential change-with-time is then obtained in the form of a voltage change appearing across an impedance $\underline{Z}$, and the AC component is in turn amplified by the amplifier 204 through a capacitor $\underline{C}$ to measure the electrostatic potential of the charged surface in terms of readings on the meter 206.

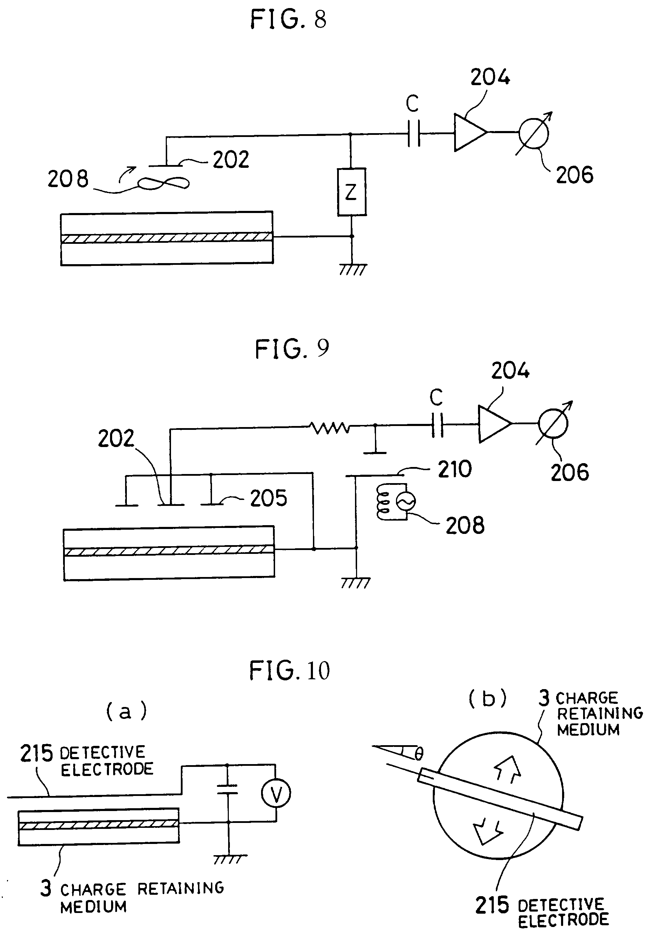

Figure 8 shows an example of a rotary detector, wherein a rotary blade is indicated at 208.

Between an electrode 202 and a charged surface of an electrostatic information recording medium 3, there is the electrically conductive rotary blade 208 driven for rotation by driving means (not illustrated). As a result, the detection electrode 202 is periodically and electrically shielded relative to the electrostatic information recording medium 3. Potential signals varying periodically at an amplitude corresponding to the electrostatic potential of a charged surface is then detected by the detection electrode 202, and the AC component is in turn amplified by an amplifier 204 for reading.

Figure 9 illustrates an example of a vibrating-reed detector, wherein reference numerals 208 and 210 stand for a driving circuit and a vibrating reed, respectively.

The vibrating reed 210 of one electrode forming a capacitor is vibrated by the driving circuit 208 to change the capacitor's capacity. As a result, DC potential signals detected by the detector electrode 202 are modulated, and the AC component is then amplified and detected. With this detector designed to convert a direct current to an alternate current, it is possible to measure potentials with high sensitivity and satisfactory stability.

Figure 10 is a view showing a further example of potential reading, in which potentials are detected by computed tomography (CT) with an elongate detector electrode.

Where a detector electrode 215 is located across and in opposition to a charge-accumulated surface, the data obtained are in the form of curvilinear integration values along the detector electrode. In other words, data corresponding to the CT data are obtained. Thus, the detector electrode is scanned on its overall surface as shown by an arrow in Figure 47(b) and at varied angles (θ) to gather the required data. The obtained data are then processed with CT algorithm, thereby determining a potential distribution on a charge retainer.

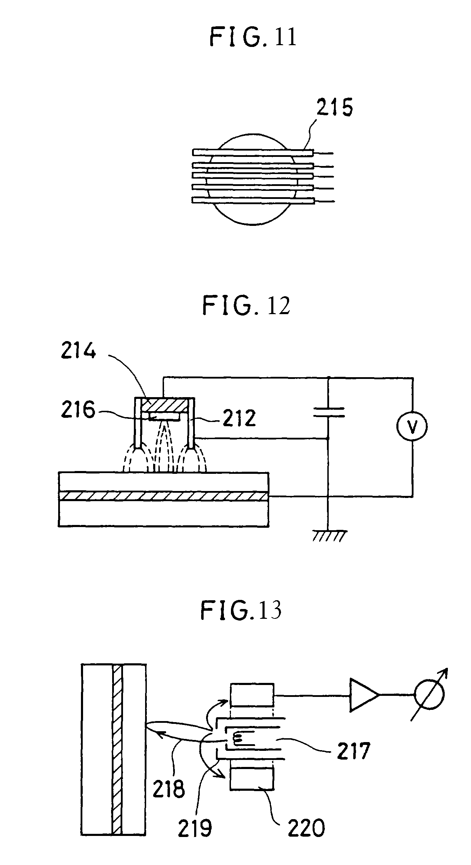

It is noted that if a plurality of detector electrodes 215 are arranged as shown in Figure 11, then the data-gathering rates and hence the overall processing rates are improved.

Figure 12 shows an example of a collector type detector, in which reference numeral 212 denotes a grounded type metallic cylinder, 214 an insulator and 216 a collector.

The collector 216 contains a radioactive substance which emits rays. In the metallic cylinder, the air is thus ionized to form positive and negative ion pairs. Under natural conditions, these ions tend to disappear by recombination and diffusion and are at equilibrium. In the presence of an electric field, however, they collide repeatedly with air molecules through thermal motion and migrate statistically toward the electric field, thus carrying charges.

More specifically, for the reason that the air is made electrically conductive by ions, an equivalent electrical resistance passage is taken as being defined between the collector 216 and a surrounding object.

Consequently, holds for stationary state the following equation:

$$V_2 = R_2 V_1 / (R_1 + R_2)$$

wherein

$R_0$    is the resistance between the charged surface of the electrostatic information recording medium 3 and the grounded metallic cylinder 212,

$R_1$    is the resistance between the charged body and the collector 216,

$R_2$    is the resistance between the collector 216 and the grounded metallic cylinder 212,

$V_1$    is the potential of the charged body, and

$V_2$    is the potential of the collector 216.

Thus, it is possible to find the potential of the electrostatic information recording medium by reading the potential of the collector 216.

Figure 13 is a view showing an example of an electron beam type of potential reader system, in which reference numeral 217 denotes an electron gun, 218 electron beams, 219 a first diode and 220 a secondary electron amplifier section.

Electrons leaving the electron gun 217 are deflected by an electrostatic or electromagnetic deflector and scan a charged surface. A portion of the scanning electron beams joins to the charges of the charged surface into a charging current, and so the potential of the charged surface drops to the equilibrium potential, correspondingly. Another portion of the beams is modulated and returned to the electron gun 217, and then collides with the first diode 219. The resultant secondary electrons are amplified by the secondary electron amplifier 220 and obtained from the anode in the form of a signal output. As the return electron beams, reflected or secondary electrons may be used.

With the electron beam type of potential reader system, uniform charges are formed on the medium after scanning, but a current corresponding to a latent image is detected during scanning. When the latent image carries negative charges, the accumulation of charges by electrons is reduced in a region (unexposed) carrying much charges, so that the resultant charging current is limited. However, a maximum charging current occurs, for instance, in a region where any charge is not present. On the contrary, positive charges define a negative type.

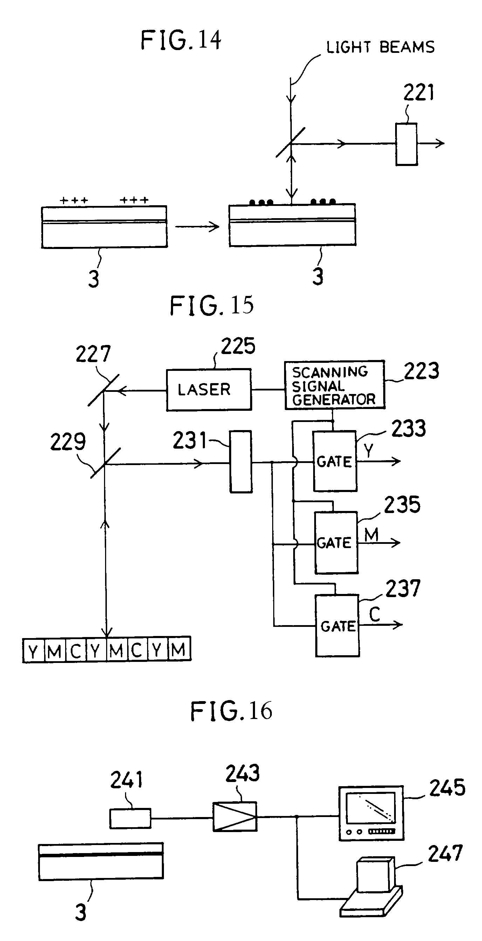

Figure 14 illustrates another example of the potential reader system. An electrostatic information recording medium 3, on which an electrostatic latent image is formed, is toner-developed. The colored surface is then irradiated with light beams for scanning. The reflected light is converted to electrical signals by a photoelectric converter 221. With such a system, high resolving-power is attainable by reducing the diameter of light beams and the detection of electrostatic potentials can be easily carried out in optical fashion.

Figure 15 shows a further example of the potential reader system. Prismatic images $\underline{R}$, $\underline{G}$ and $\underline{B}$ formed by such fine color filters as will be described later are toner-developed. Then, the colored rface is irradiated with light beams to convert the reflected light to signals $\underline{Y}$, $\underline{M}$ and $\underline{C}$. In Figure 15, reference numeral 223 denotes a scanning signal generator, 225 a laser, 227 a reflector, 229 a half mirror, 232 a photoelectric converter and 233, 235 and 235 gate circuits.

With scanning signals from the generator 223, a colored surface is irradiated with laser beams from the laser 225 through the reflector 227 and half mirror 229 for scanning. The light reflected from the colored surface is then fed into the photoelectric converter 231 to convert it to electrical signals. If the gate circuits 233, 235 and 237 are controlled for opening or closing synchronously with the signals from the generator 223, then they are controlled for opening or closing synchronously with the pattern of the fine filters. Thus, it is possible to obtain signals $\underline{Y}$, $\underline{M}$ and $\underline{C}$, even when they are not previously colored.

It is noted that even when a color image is split into three planes as will be described later, signals $\underline{Y}$, $\underline{M}$ and $\underline{C}$ are quite similarly obtainable, again, without previously coloring them.

In the systems illustrated in Figures 14 and 15, it is required for the toner-developed image to have the $\gamma$ characteristic corresponding to the quantity of electrical charging of the latent image. For that reason, it is required to provide no threshold value with respect to an analog change in the quantity of electrical charging. Given the corresponding relationship, it is then possible to correct $\gamma$ by electrical processings, even when the $\gamma$ characteristic is no coincidence with the quantity of electrical chargings.

Example 1 - Electrostatic Information Recording Medium

A mixed solution of 1 g of a polyester resin (Bylon 200) and 10 g of chloroform was coated on an 1-mm thick glass substrate by doctor blade coating, and was thereafter dried at 100°C for 1 hour to form an insulating layer of 10 μm in thickness.

Further laminated thereon was amorphous selenium to a film thickness of 10 μm at a degree of vacuum of $10^{-5}$ Torr by vapor deposition, thereby preparing an electrophotographic information recording medium as shown in Figure 5(a).

Example 2

An ITO transparent electrode is laminated on an 1-mm thick glass electrode support to a thickness of 1000 Å by sputtering to prepare an electrode member. This transparent electrode is spaced away from the above-electrostatic information recording medium through a gap of 10 μm defined by a polyester film spacer in opposite relation to each other. A DC voltage of 700 V is applied between both electrodes with the ITO electrode positively. While the voltage is impressed, exposure is carried out from the transparent electrode for 1 second, using a halogen lamp having a luminous intensity of 1000 luxes. After the completion of the exposure, the voltage was shut off.

In order to release the photoconductive layer from the electrostatic information recording medium after the exposure, the recording medium was removed out in a dark place. Thereafter, the polyester film 80 coated thereon with the adhesive layer 90 was bonded to the photoconductive layer and then peeled therefrom, whereby the photoconductive layer 9 was released from the electrostatic information recording medium 3. Where the insulating layer after peeling-off was measured in terms of its surface potentials by a surface electrometer, a surface potential of 250 V was obtained on the exposed region and a surface potential of 50 V on the unexposed region.

Similar exposure was carried out, while a resolution pattern film was brought in close contact with the back side of the ITO electrode. Thereafter, the selenium layer was released in a similar manner. After peeling-off, the insulating layer was subjected thereon to X-Y axis scanning with a 50 x 50 μm probe surface for measuring microarea potentials to process potential data of 50 μm units, which were in turn displayed on a CRT by potential-brightness conversion on an enlarged scale. As a result, resolution patterns of up to 100 μm were confirmed on the CRT.

The electrostatic information recording medium after peeling-off was permitted to stand at room temperature of 25°C and a humidity of 35% for three months. Subsequent potential reading by scanning indicated that resolution pattern displays quite similar to those just after the exposure were obtained.

Example 3

In Ex.2, the recording medium was left in a dark place with the selenium layer kept intact, after pattern exposure. Three days later, its resolution was estimated at room temperature of 25°C and 35% R.H. by potential reading by scanning. As a result, the initial resolution of 100 μm was already found to disappear. In other words, it was found from a uniform potential distribution that charges diffused throughout and along the film plane.

**Claims**

1. An electrostatic information recording and reproducing method comprising:

   preparing an electrostatic information recording medium (3) having an electrode (13) provided on a rear side thereof and further having an insulating layer (11) laminated on said electrode (13), and a photoconductive layer (9) separably laminated on said insulating layer (11);

   disposing said electrostatic information recording medium (3) to face a transparent electrode (7);

   carrying out patternwise exposure from the transparent electrode side or the electrostatic information recording medium side with a voltage being applied between the two electrodes (7 and 13) ; the method being characterized by

   separating said photoconductive layer (9), whereby recorded electrostatic information on said electrostatic information recording medium is prevented from migration.

2. A recording and reproducing method according to Claim 1, wherein the information recorded on said electrostatic information recording medium is an electric charge potential.

3. A recording and reproducing method according to Claim 1 or 2, wherein the electric charge potential is read by detecting an electric potential produced by electric charge induced on a detection electrode (203) disposed to face said electrostatic information recording medium.

4. A recording and reproducing method according to Claim 1 or 2, wherein a guard electrode (205) is provided around said detection electrode, and the surfaces of said detection and guard electrodes are provided with an insulating film (211).

5. A recording and reproducing method according to Claim 3 or 4, wherein said detection electrode (215) is an elongated rod-shaped electrode, and the surface of said electrostatic information recording medium (3) is scanned with said detection electrode to obtain an electric potential distribution by the CT method.

6. A recording and reproducing method according to Claim 3 or 4, wherein said detection electrode (203) scans across the surface of said electrostatic information recording medium (3) in or out of contact with it, thereby taking out the stored electric charge and thus detecting the recorded information in the form of an electric potential or an electric current value.

7. A recording and reproducing method according to Claim 1 or 2, wherein the electric charge potential is read by developing said electrostatic information recording medium (3) with toner, applying a beam of light to said developed electrostatic information recording medium, and photoelectrically converting (221) the reflected light from said electrostatic information recording medium.

8. An electrostatic information recording medium adapted for use in the process of any one of claims 1-7, comprising a photoconductive layer (9) laminated on an insulating layer (11) which is in turn laminated on an electrode (13), characterised in that said photoconductive layer (9) is peelably removable from said insulating layer, with said medium in an electrostatically charged state, to leave electrostatically recorded information on said insulating layer (11).

**Patentansprüche**

1. Elektrostatisches Informationsaufzeichnungs- und -Wiedergabeverfahren, umfassend:

   Bereitstellen eines elektrostatischen Informationsaufzeichnungsmediums (3) mit einer Elektrode (13), die auf dessen Rückseite angeordnet ist, und weiter mit einer Isolierschicht (11), die auf die genannte Elektrode (13) laminiert ist, und einer fotoleitenden Schicht (9), die trennbar auf die genannte Isolierschicht (11) auflaminiert ist,

   Anordnen des genannten elektrostatischen Informationsaufzeichnungsmediums (3) gegenüber einer transparenten Elektrode (7),

   mustermäßiges Aussetzen von der Seite der transparenten Elektrode oder der Seite des elektrostatischen Informationsaufzeichnungsmediums mit einer Spannung, die zwischen den beiden Elektroden (7 und 13) angelegt wird, wobei das Verfahren gekennzeichnet ist durch das Abtrennen der genannten fotoleitenden Schicht (9), wodurch die auf dem genannten elektrostatischen Informationsaufzeichnungs-medium gespeicherte elektrostatische Informa-tion an einem Wandern gehindert wird.

2. Aufzeichnungs- und Wiedergabeverfahren nach Anspruch 1, bei welchem die auf dem genannten elektrostatischen Informationsaufzeichnungsmedium aufgezeichnete Information ein elektrisches Ladungspotential ist.

3. Aufzeichnungs- und Wiedergabeverfahren nach Anspruch 1 oder 2, bei welchem das elektrische Ladungspotential gelesen wird durch die Feststellung eines elektrischen Potentials, welches durch eine induzierte elektrische Ladung auf einer Detektorelektrode (203) produziert wird, die dem elektrostatischen Informationsaufzeichnungsmedium gegenüberliegend angeordnet ist.

4. Aufzeichnungs- und Wiedergabeverfahren nach Anspruch 1 oder 2, bei welchem eine Schutzelektrode (205) um die Detektorelektrode vorgesehen ist und die Oberflächen der Detektroelektrode und der Schutzelektrode mit einem Isolierfilm (211) versehen sind.

5. Aufzeichnungs- und Wiedergabeverfahren nach Anspruch 3 oder 4, bei welchem die Detektorelektrode (215) eine langgestreckte stabförmige Elektrode ist und die Oberfläche des genannten elektrostatischen Informationsaufzeichnungsmediums (3) mit dieser Detektorelektrode abgestatet wird, um eine elektrische Potentialverteilung durch das CT-Verfahren zu erhalten.

6. Aufzeichnungs- und Wiedergabeverfahren nach Anspruch 3 oder 4, bei welchem die genannte Detektorelektrode (203) die Oberfläche des genannten elektrostatischen Informationsaufzeichnungsmediums (3) in oder außer Kontakt mit diesem abtastet und dadurch die gespeicherte elektrische Ladung herausliest und so die gespeicherte Information in Form eines elektrischen Potentials oder eines elektrischen Stromwertes ermittelt.

7. Aufzeichnungs- und Wiedergabeverfahren nach Anspruch 1 oder 2, bei welchem das elektrische Ladungspotential durch Entwicklung des genannten elektrostatischen Informationsaufzeichnungsmediums (3) mit einem Toner ausgelesen wird, wobei ein Lichtstrahl auf das entwickelte elektrostatische Informationsaufzeichnungsmedium gerichtet und das von dem genannten elektrostatischen Informa-

tionsaufzeichnungsmedium reflektierte Licht foto-elektrisch umgewandelt wird (221).

8. Elektrstatisches Informationsaufzeichnungsmedium zur Verwendung bei dem Verfahren nach einem der Ansprüche 1 bis 7, umfassend eine fotoleitende Schicht (9), die auf eine Isolierschicht (11) laminiert ist, die wiederum ihrerseits auf eine Elektrode (13) laminiert ist, dadurch gekennzeichnet, daß die genannte fotoleitende Schicht (9) abschälbar von der genannten Isolierschicht abnehmbar ist, während das genannte Medium in einem elektrostatisch geladenen Zustand ist, um die elektrostatisch gespeicherte Information auf der genannten Isolierschicht (11) zu belassen.

## Revendications

1. Procédé d'enregistrement et de reproduction électrostatique d'information, comprenant le fait de :

préparer un support d'enregistrement électrostatique d'information (3) ayant une électrode (13) prévue sur une face arrière de celui-ci et ayant de plus une couche isolante (11) plaquée sur ladite électrode (13), et une couche photoconductrice (9) plaquée de manière séparable sur ladite couche isolante (11) ;

disposer ledit support d'enregistrement électrostatique d'information (3) en face d'une électrode transparente (7) ;

effectuer une exposition à motifs depuis le côté de l'électrode transparente ou le côté du support d'enregistrement électrostatique d'information, une tension étant appliquée entre les deux électrodes (7 et 13) ;

le procédé étant caractérisé par le fait de :

séparer ladite couche photoconductrice (9), ce par quoi l'information électrostatique enregistrée sur ledit support d'enregistrement électrostatique d'information est empêchée de migrer.

2. Procédé d'enregistrement et de reproduction selon la revendication 1, dans lequel l'information enregistrée sur ledit support d'enregistrement électrostatique d'information est un potentiel de charge électrique.

3. Procédé d'enregistrement et de reproduction selon la revendication 1 ou 2, dans lequel le potentiel de charge électrique est lu en détectant un potentiel électrique produit par une charge électrique induite sur une électrode de détection (203) placée en regard dudit support d'enregistrement électrostatique d'information.

4. Procédé d'enregistrement et de reproduction selon la revendication 1 ou 2, dans lequel une électrode de garde (205) est prévue autour de ladite électrode de détection, et les surfaces desdites électrodes de détection et de garde sont munies d'un film isolant (211).

5. Procédé d'enregistrement et de reproduction selon la revendication 3 ou 4, dans lequel ladite électrode de détection (215) est une électrode en forme de tige allongée, et la surface dudit support d'enregistrement électrostatique d'information (3) est balayée avec ladite électrode de détection pour obtenir une distribution de potentiel électrique par la méthode de CT.

6. Procédé d'enregistrement et de reproduction selon la revendication 3 ou 4, dans lequel ladite électrode de détection (203) balaie la surface dudit support d'enregistrement électrostatique d'information (3) en ou hors de contact avec lui, prélevant ainsi la charge électrique stockée et détectant ainsi l'information enregistrée sous la forme d'un potentiel électrique ou d'une valeur de courant électrique.

7. Procédé d'enregistrement et de reproduction selon la revendication 1 ou 2, dans lequel le potentiel de charge électrique est lu en développant ledit support d'enregistrement électrostatique d'information (3) avec un toner, en appliquant un faisceau de lumière audit support d'enregistrement électrostatique d'information développé, et en convertissant photo-électriquement (221) la lumière réfléchie par ledit support d'enregistrement électrostatique d'information.

8. Support d'enregistrement électrostatique d'information adapté pour être utilisé dans le procédé selon l'une quelconque des revendications 1 à 7, comprenant une couche photoconductrice (9) plaquée sur une couche isolante (11) qui est à son tour plaquée sur une électrode (13), caractérisé en ce que ladite couche photoconductrice (9) peut être retirée de manière pelable de ladite couche isolante, ledit support étant dans un état de charge électrostatique, pour laisser l'information enregistrée par voie électrostatique sur ladite couche isolante (11).

FIG.1

9
11
13
15

## FIG. 2 (a)

## FIG. 2 (b)

## FIG. 2 (c)

## FIG. 2 (d)

FIG. 3 ( a )

FIG. 3 ( b )

FIG. 3 ( c )

# FIG. 4

203  201  205
207
11
13
15
3
C  V  209

# FIG. 5

211  203  205
C  V
3

# FIG. 6

213
V
3

# FIG. 7

204
202
205
Z
206
3

## FIG. 8

## FIG. 9

## FIG. 10

(a)

215 DETECTIVE ELECTRODE

3 CHARGE RETAINING MEDIUM

(b) 3 CHARGE RETAINING MEDIUM

θ

215 DETECTIVE ELECTRODE

## FIG. 11

215

## FIG. 12

214

216

212

V

## FIG. 13

217

218

219

220

FIG.14

LIGHT BEAMS

221

+++  +++

3

3

FIG.15

227

225 LASER

223 SCANNING SIGNAL GENERATOR

229

231

233 GATE Y

235 GATE M

237 GATE C

Y M C Y M C Y M

FIG.16

241

243

245

247

3